# EUROPEAN PATENT APPLICATION

(11) **EP 4 852 108 A1**
(43) Date of publication of application: **09.12.2026**
(21) Application number: 26170935.6
(22) Date of filing: 07.04.2026
(51) Int. Cl.: H01M 8/04089, H01M 8/04746

(54) **BISTABLE MECHANISM FOR FUEL CELL PRESSURE RELIEF**

(30) Priority: 04.06.2025 US 202519228517
(71) Applicant: Honeywell International s.r.o, 148 00 Chodov (CZ)
(72) Inventor: KNOB, Martin, Charlotte, 28202 (US); MARES, Vaclav, Charlotte, 28202 (US); KLISTINEC, David, Charlotte, 28202 (US)
(74) Representative: Ingrassia, Fisher & Lorenz UK Ltd.

(57) **Abstract**

A system includes a first duct coupled to a first gas supply coupled to a first side of a fuel cell membrane stack. A second duct is coupled to a second gas supply coupled to a second side of a fuel cell membrane stack. A servo is coupled to the first duct and the second duct and includes a servo rod configured to move laterally in response to a difference in pressure between the first gas and the second gas. An actuatable first cap is coupled to the first duct and a first bistable mechanism is coupled to the first cap and positioned to apply pressure to the first cap in a first stable closed position and release pressure on the first cap in response to movement of a first end of the servo rod of the actuator pushing the bistable mechanism to a second stable open position.

## Description

### GOVERNMENT RIGHTS

The project leading to this application has received funding from the Clean Aviation Undertaking under grant agreement No 101101967 under European Union's NEW BORN research and innovation programme.

### BACKGROUND

A fuel cell-based power generator system can be very sensitive to differences in pressure across a membrane electrode assembly (MEA) of the fuel cell. Abrupt depressurization may be caused by a failure or complete loss of some of the components. Existing forms of protection may not provide a fast enough pressure equalization across the MEA prior to damage occurring.

### SUMMARY

A system includes a first duct coupled to a first gas supply coupled to a first side of a fuel cell membrane stack. A second duct is coupled to a second gas supply coupled to a second side of a fuel cell membrane stack. A servo is coupled to the first duct and the second duct and includes a servo rod configured to move laterally in response to a difference in pressure between the first gas and the second gas. An actuatable first cap is coupled to the first duct and a first bistable mechanism is coupled to the first cap and positioned to apply pressure to the first cap in a first stable closed position and release pressure on the first cap in response to movement of a first end of the servo rod of the actuator pushing the bistable mechanism to a second stable open position.

### BRIEF DESCRIPTION OF THE DRAWINGS

FIG. 1 is a block diagram of a power generator having pressure overprotection for a fuel cell membrane according to an example embodiment.
FIG. 2 is a block representation of an example joint that includes a stop according to an example embodiment.
FIG. 3 is a block representation of an alternative bistable mechanism according to an example embodiment.
FIG. 4 is a block diagram illustrating an alternative actuator to provide overpressure relief to a fuel cell membrane according to an example embodiment.

### DETAILED DESCRIPTION

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical and electrical changes may be made without departing from the scope of the present invention. The following description of example embodiments is, therefore, not to be taken in a limited sense, and the scope of the present invention is defined by the appended claims.

Fuel cell-based power generator systems generally include a membrane electrode assembly (MEA) stack that is provided hydrogen on one side and oxygen on another side. Conduits, ducts, or lines may be used to provide the hydrogen and oxygen, and such conduits, or other components of the power generator may be subjected to damage causing rapid pressure changes on one side of the MEA. Fuel cell-based power generator systems may experience difference in pressure across the MEA that can quickly damage the MEA unless the different pressures are quickly equalized. The use of controllers that operate to open one or more valves may not equalize the different pressures quickly enough to prevent damage to the MEA.

An improved depressurization system for a fuel cell-based power generator uses one or more bistable mechanisms to quickly equalize pressure across a membrane electrode assemble (MEA) of the fuel cell. The system reacts to a small change in pressure to quickly equalize pressure on both sides of the MEA.

MEA stacks may be very sensitive and can become damaged if a pressure difference across the membrane is greater than 0.5 lever. To provide a redundant safety system to protect the stacks, the bi-stable mechanism provides faster and more reliable protection than electronic and software based solutions. In a power outage, software and a few electrical components may not act fast enough to guarantee protection for fuel cell stacks. The bi-stable mechanism based protection will work equally well in power outages or electrical circuit disturbances and protect the expensive stacks.

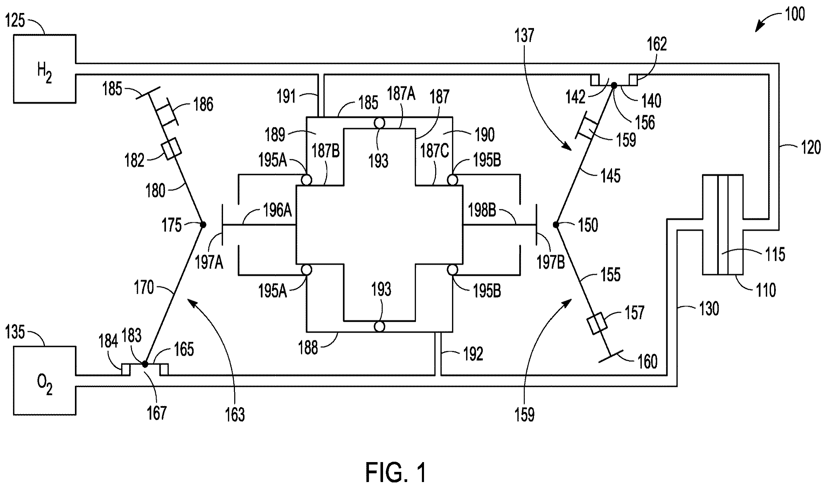

FIG. 1 is a block diagram of a power generator 100 having pressure overprotection for a fuel cell membrane electrode assembly. Power generator 100 includes a fuel cell 110 having an MEA 115. Fuel cell 110 is coupled via a first gas supply line 120 coupled to a first gas supply 125. The first gas in one example is hydrogen for provision to an anode side of the MEA 115. Fuel cell 110 is also coupled via a second gas supply line 130 to a second gas supply 135. The second gas in one example includes oxygen for provision to a cathode side of the MEA 115.

To prevent damage to the MEA 115 one or more differential pressure actuated bistable mechanisms are used to equalize pressure on both sides, the anode side and the cathode side, of the MEA 115. A first bistable mechanism 137 includes a cap 140 covering an opening 142 in the first gas supply line 120. The cap 140 is biased against the opening 142 by a lever 145 that is coupled via a first joint 150 and lever 155. Lever 145 may be coupled to the cap by hinge 156 that allows rotation of lever 145 about the hinge 156. A spring 157 is positioned in one of the levers to bias or pre-load the first bistable mechanism against the cap 140 such that the cap 140 seals the opening 142. The lever 155 may be secured on an end opposite the first joint 150 via a hinged point 160 which may be part of a frame (not shown for ease of illustration) of the power generator 100. The lever 155 may abut a stop 159 to prevent rotation of the levers at a first position, a pre-loaded position, such that sufficient force is applied to the cap to maintain a seal with the opening 142.

A gasket may be included to help maintain the seal of the cap 140 on the opening 142. Movement of the first joint 150 a sufficient distance to the right will cause the joint to rotate and move to a second position, an open or unloaded position, that causes the cap 140 to open, releasing pressure from opening 142. Cap 140 may be hinged via a hinge 162, enabling the cap 140 to rotate clockwise once the joint is moved to the second position. Hinge 162 may alternatively be positioned to enable the cap 140 to rotate counterclockwise.

A second bistable mechanism 163 includes a cap 165 covering an opening 167 in the second gas supply line 130. The cap 165 is biased against the opening 167 by a lever or rod 170 that is coupled via a joint 175 and lever or rod 180. A spring 182 is positioned in one of the levers to bias or pre-load the second bistable mechanism 163 against the cap 165 at a hinge 183 such that the cap 165 seals the opening 167. A gasket may be included to help maintain the seal. The rod 180 may be secured on an end opposite the joint 175 via a hinge 183 and joint 184. The rod 180 may abut have a stop 186 to prevent rotation of the levers at a position such that sufficient force is applied to the cap to maintain a seal with the opening 167.

Movement of the second joint 175 a sufficient distance to the left will cause the second joint 175 to rotate and move to a second position, an open or unloaded position, that causes the cap 165 to open, releasing pressure from opening 167. Cap 165 may be hinged via hinge 183 and joint 184, enabling the cap 165 to rotate counterclockwise once the joint is moved to the second position. In further examples, stops may be incorporated in the first joint 150 and second joint 175 to ensure sufficient pressure is applied to the cap in response to the bistable mechanisms being in the closed positions.

In one example, a pressure differential between first gas supply line 120 and second gas supply line 130 is sensed by a servo actuator 185 that contains a piston 187 or servo rod that moves laterally in response to a difference in pressure between the first gas supply line 120 and the second gas supply line 130. The piston 187 is disposed within a container 188 that includes a first chamber 189 and a second chamber 190. The piston 187 includes a first section 187A that seals the first chamber 189 and second chamber 190 from each other.

The first chamber 189 has a first tap 191 coupled to the first gas supply line 120 to pressurize the first chamber 189 at a same pressure as the first gas supply line 120. The second chamber 190 has a second tap 192 coupled to the second gas supply line 130 to pressurize the second chamber 190 at a same pressure as the second gas supply line 130. A compressible seal or ring or sealed sleeve 193 may be coupled around the first section 187A and positioned to contact an inner middle lateral surface of the container 188 to minimize gas flow between the first chamber 189 and the second chamber 190 in response to a difference in pressure between the two chambers. Sealed sleeve 193 also allows lateral movement of the piston 187 within the container 188

The piston 187 includes a first lateral piston portion 187B and a second lateral piston portion 187C separated from each other by the first section 187A. The first piston lateral portion 187B is sealed within a first lateral container portion 194A by a compressible ring or sleeve 195A. The second lateral piston portion 187C is sealed within a second lateral container portion 194B by a compressible ring or sleeve 195B. The sleeves 195A and 195B allow lateral movement of piston 187 within the container.

The first lateral piston portion 187B includes a first shaft 196A that extends laterally to contact second joint 175 in response to the piston 187 moving laterally toward the second joint 175. First shaft 196A may include a block 197A positioned to securely contact the second joint 175. A higher pressure in second gas line 130 as compared to the pressure in first gas line 120 causes a higher pressure in second chamber 190, pushing the piston laterally toward second joint 175 until bistable mechanism 163 snaps to an open position due to movement of the second joint 175 and rods 180 and 170 laterally to the left. The open position opens cap 165, relieving the pressure in second gas line 130 to ambient and reducing a pressure gradient across MEA 115.

The second lateral piston portion 187C includes a second shaft 196B that extends laterally to contact first joint 150 in response to the piston 187 moving laterally toward the first joint 150. Second shaft 196B may include a block 197B positioned to securely contact the first joint 150. Higher pressure in first gas line 120 as compared to the pressure in second gas line 130 causes a higher pressure in first chamber 190, pushing the piston laterally toward first joint 150 until bistable mechanism 137 snaps to an open position due to movement of the first joint 150 and lever 145 and 155 laterally to the right. The open position opens cap 140, relieving the pressure in second gas line 120 to ambient and reducing a pressure gradient across MEA 115.

Servo actuator 185 operates in direct response to pressure differences to apply force to one of the bistable mechanisms to cause the bistable mechanism to move to an unloaded position, opening the corresponding cap. Pre- loading of the bistable mechanisms may be achieved by both pressure energy of a working media, and elastic deformation energy of a sealant and/or springs 157 and 182. In a working position, levers of the bistable mechanisms are adjusted to pre-loaded angles by hard stops in the first and second joints 150 and 175. The angles are not shown to scale in FIG. 1.

The smaller these angles are, the more sensitive the mechanism is to the pressure differential, but also to vibrations. An optimization or calibration may be performed with minimal experimentation to arrive at angles that balance the angles versus natural frequencies of both the bistable mechanism and the servo actuator 185. If the pressure differential causes displacement larger than a threshold, the servo actuator reaches the preloaded levers of the bistable mechanism(s), and pushes them over to the position, in which the pressurized medium cap or plug pops open resulting in rapid depressurization, and therefore equalization of pressures of the two media, and hence the protection of the fuel cell 110 MEA 115.

Once one or both of the bistable mechanisms move to the open position, they may be manually reset once the condition causing overpressure has been resolved and inspection confirms the MEA 115 has not been damaged.

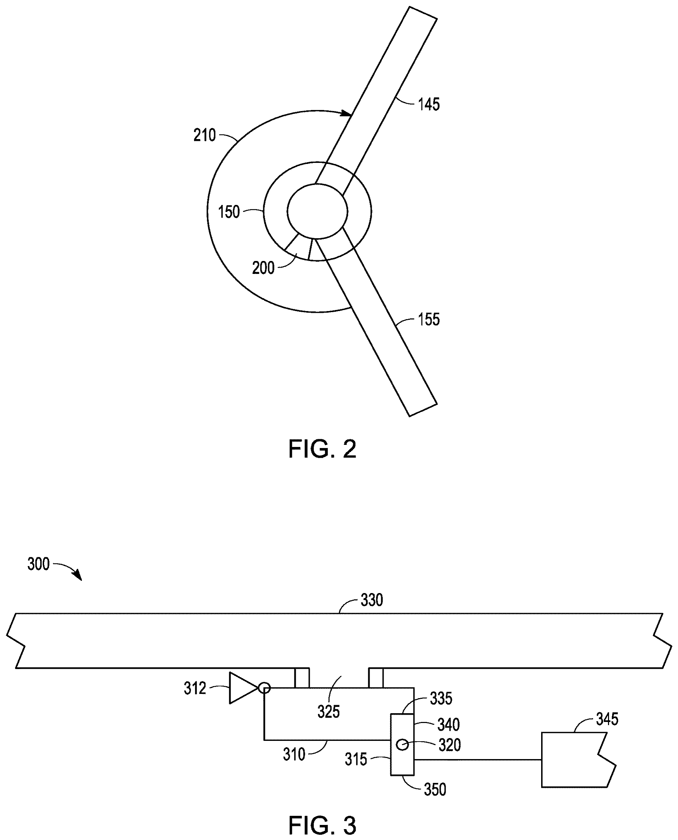

FIG. 2 is a block representation of an example joint 150 that includes a stop 200 in a desired pre-loaded position of lever 145 and 155. The stop 200 may be rotationally positioned to provide a desired pre-loaded angle 210 that is beyond 90 degrees. In one example, the angle may vary from just over 90 degrees to 100 degrees or more depending on calibration results as described above.

FIG. 3 is a block representation of an alternative bistable mechanism 300. Bistable mechanism 300 includes a cap 310 coupled to a rotatable latch 315. Cap 310 may be coupled to hinge 312 to enable rotation of the cap 310. Latch 315 may rotate about a fixed shaft 320. Latch 315 may be positioned in a closed position to cover an opening 325 in a gas supply line 330. The cap 310 may include a notch 335 positioned to engage with a first end 340 of the latch 315 to keep the cap in a closed position.

A servo piston 345 is positioned to engage a second end 350 of the latch 315 to cause rotation of the latch 315 and hence disengagement of first end 340 from the notch 335 and a resulting opening of the latch 315 via hinge 312 from the opening 325 and release of gas from the gas supply line 330. In one example, the cap 310 need not include a notch, as the first end 340 may abut a flat surface of the cap and be displaced in the same manner to open the cap. The piston 345 may be actuated similarly to piston 187 based on a higher pressure than a reference pressure or pressure of another gas line.

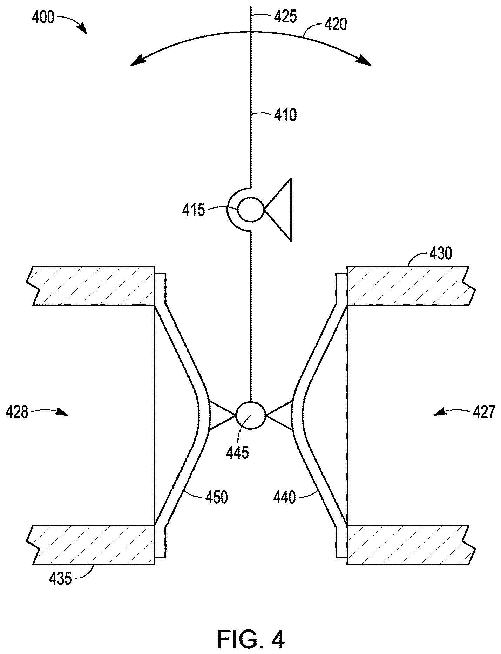

FIG. 4 is a block diagram illustrating an alternative servo actuator 400 to provide overpressure relief to a fuel cell membrane. Actuator 400 includes a lever 410 coupled to a fixed rotation point 415. The lever 410 moves according to arrow 420, rotating about the fixed rotation point 415 in response to pressure difference between two ducts coupled to gas supplies as in previous examples.

A first end 425 of the lever 410 operates to open pressure relief caps on the ducts in a manner similar to the actuation of latch 315. A first one of the ducts is coupled to a first chamber 427. A first flexible membrane 440 flexes outward from the chamber 427 and presses against a second end 445 of lever 410 in response to increases in pressure in first chamber 427. The second end 445 may include an enlarged portion, such as a sphere or other curved structure to interact with the membranes without damaging the membranes.

A second one of the ducts is coupled to a second chamber 428 which includes a second flexible membrane 450. Differences in pressure between the two chambers cause the membranes 440 and 450 to flex inward or outward depending on the difference in pressure between the chambers to move the second end 445 per arrow 420.

When the pressure in the first chamber 427 is greater than the pressure in the second chamber 428, the second end 445 of the lever 410 is moved toward the second chamber 428 causing rotation of the lever such that the second end 425 moves in the opposite direction. In response to the pressure difference reaching a selected threshold pressure difference, a cap on the duct having the higher pressure is opened, reducing the pressure in that duct.

### Examples:

A system includes a first duct coupled to a first gas supply coupled to a first side of a fuel cell membrane stack. A second duct is coupled to a second gas supply coupled to a second side of a fuel cell membrane stack. A servo is coupled to the first duct and the second duct and includes a servo rod configured to move laterally in response to a difference in pressure between the first gas and the second gas. An actuatable first cap is coupled to the first duct and a first bistable mechanism is coupled to the first cap and positioned to apply pressure to the first cap in a first stable closed position and release pressure on the first cap in response to movement of a first end of the servo rod of the actuator pushing the bistable mechanism to a second stable open position.

2. The system of example 1 and further including an actuatable second cap coupled to a second duct and a second bistable mechanism coupled to the second cap and positioned to apply pressure to the second cap in a first stable position and release pressure on the second cap in response to movement of a second end of the servo rod of the actuator pushing the second bistable mechanism to a second stable open position.

3. The system of example 2 wherein the first bistable mechanism includes a first spring arm coupled to rotate about a first fixed position end, a second arm having a first end rotatably coupled to a second end of the first spring arm and a second end coupled to the first cap, and wherein the second bistable mechanism includes a second spring arm coupled to rotate about a second fixed position end, and a third arm having a first end rotatably coupled to a second end of the second spring arm and a second end coupled to the second cap.

4. The system of any of examples 2-3 wherein the servo includes a servo housing having a middle portion configured to mate with a middle portion of the servo rod, a first opening positioned between the second end of the servo rod and the middle portion of the servo rod, and a second opening positioned between the first end of the servo rod and the middle portion of the servo rod.

5. The system of example 4 wherein the servo housing includes a first portion positioned between the middle portion and the first end of the servo rod having a first diameter and a second portion positioned between the middle portion and the second end of the servo rod having a second diameter smaller than the first diameter.

6. The system of example 5 wherein the servo rod includes a first portion extending from the middle portion into the first portion of the servo housing and a second portion extending from the middle portion into the second portion of the servo housing.

7. The system of example 6 wherein the first portion of the servo rod movingly engages with the first portion of the servo housing and the second portion of the servo rod movingly engages with the second portion of the servo housing.

8. The system of example 7 wherein the first and second diameters are selected to provide a desired threshold pressure difference for movement of the servo rod.

9. The system of any of examples 1 wherein the first bistable mechanism incudes a first spring arm coupled to rotate about a first fixed position end and a second arm having a first end rotatably coupled to a second end of the first spring arm and a second end coupled to the first cap.

10. The system of example 9 and further comprising a hard stop positioned to prevent rotation of the second end of the first spring arm and the first end of the second arm beyond the hard stop.

11. The system of example 10 wherein a first end of the servo rod is configured to push the second end of the first spring arm and the first end of the second arm in response to pressure of the first gas in the first duct being higher than a pressure of the second gas in the second duct.

12. The system of example 11 wherein the first end of the servo rod pushes the second end of the first spring arm and the first end of the second arm in response to the pressure of the first gas in the first duct exceeding the pressure of the second gas in the second duct by a first threshold pressure difference.

13. A method includes providing a first gas from first duct and second gas from a second duct to a servo having portion that moves laterally in response to a difference in pressure of the first gas and second gas, actuating a first bistable mechanism coupled to a first cap coupled to the first duct in response to pressure in the first duct exceeding pressure in the second duct by a first threshold pressure, and actuating a second bistable mechanism coupled to a second cap coupled to the second duct in response to pressure in the second duct exceeding pressure in the first duct by a second threshold pressure.

14. The method of example 13 wherein actuating the second bistable mechanism is performed after actuation of the first bistable mechanism.

15. The method of any of examples 13-14 and further comprising manually resetting at least one of the first bistable mechanism or the second bistable mechanism.

16. The method of any of examples 13-15 wherein the portion that moves laterally in response to a difference in pressure contacts the first or second bistable mechanism in response to the difference in pressure.

17. A system includes a first duct to couple to a first gas supply coupled to a first side of a fuel cell membrane stack, a second duct to couple to a second gas supply coupled to a second side of a fuel cell membrane stack, a servo coupled to the first duct and the second duct, the servo including a first moveable portion configured to move laterally in response to a difference in pressure between the first gas and the second gas, an actuatable first cap coupled to the first duct, and a first bistable mechanism coupled to the first cap and positioned to apply pressure to the first cap in a first stable closed position and release pressure on the first cap in response to movement of the first moveable portion of the actuator pushing the bistable mechanism to a second stable open position.

18. The system of example 17 and further including an actuatable second cap coupled to a second duct and a second bistable mechanism coupled to the second cap and positioned to apply pressure to the second cap in a first stable position and release pressure on the second cap in response to movement of a second moveable portion of the actuator pushing the second bistable mechanism to a second stable open position.

19. The system of any of examples 17-18 wherein the first bistable mechanism includes a first spring arm coupled to rotate about a first fixed position end and a second arm having a first end rotatably coupled to a second end of the first spring arm and a second end coupled to the first cap.

20. The system of example 19 and further including a hard stop positioned to prevent rotation of the second end of the first spring arm and the first end of the second arm beyond the hard stop.

Although a few embodiments have been described in detail above, other modifications are possible. For example, the logic flows depicted in the figures do not require the particular order shown, or sequential order, to achieve desirable results. Other steps may be provided, or steps may be eliminated, from the described flows, and other components may be added to, or removed from, the described systems. Other embodiments may be within the scope of the following claims.

## Claims

1. A system (100) comprising:
a first duct (120) to couple to a first gas supply (125) coupled to a first side of a fuel cell membrane stack (110);
a second duct (130) to couple to a second gas supply (135) coupled to a second side of a fuel cell membrane stack;
a servo (185) coupled to the first duct and the second duct, the servo including a servo rod (187) configured to move laterally in response to a difference in pressure between the first gas and the second gas;
an actuatable first cap (140) coupled to the first duct; and
a first bistable mechanism (137) coupled to the first cap and positioned to apply pressure to the first cap in a first stable closed position and release pressure on the first cap in response to movement of a first end of the servo rod of the actuator pushing the bistable mechanism to a second stable open position.

2. The system of claim 1 and further comprising:
an actuatable second cap (165) coupled to a second duct; and
a second bistable mechanism (167) coupled to the second cap and positioned to apply pressure to the second cap in a first stable position and release pressure on the second cap in response to movement of a second end of the servo rod of the actuator pushing the second bistable mechanism to a second stable open position.

3. The system of claim 2 wherein the first bistable mechanism comprises:
a first spring arm (155) coupled to rotate about a first fixed position end (160);
a second arm (145) having a first end rotatably coupled to a second end of the first spring arm and a second end coupled to the first cap; and
wherein the second bistable mechanism comprises:
a second spring arm (170) coupled to rotate about a second fixed position end (185); and
a third arm (180) having a first end rotatably coupled to a second end of the second spring arm and a second end coupled to the second cap.

4. The system of claim 2 wherein the servo comprises:
a servo housing (188) having a middle portion configured to mate with a middle portion of the servo rod;
a first opening positioned between the second end of the servo rod and the middle portion of the servo rod; and
a second opening positioned between the first end of the servo rod and the middle portion of the servo rod.

5. The system of claim 4 wherein the servo housing includes:
a first portion positioned between the middle portion and the first end of the servo rod having a first diameter; and
a second portion positioned between the middle portion and the second end of the servo rod having a second diameter smaller than the first diameter.

6. The system of claim 5 wherein the servo rod includes a first portion (187A) extending from the middle portion into the first portion of the servo housing and a second portion (187C) extending from the middle portion into the second portion of the servo housing.

7. The system of claim 6 wherein the first portion of the servo rod movingly engages with the first portion of the servo housing and the second portion of the servo rod movingly engages with the second portion of the servo housing.

8. The system of claim 7 wherein the first and second diameters are selected to provide a desired threshold pressure difference for movement of the servo rod.

9. The system of any one of claims 1-8 wherein the first bistable mechanism comprises:
a first spring arm coupled to rotate about a first fixed position end; and
a second arm having a first end rotatably coupled to a second end of the first spring arm and a second end coupled to the first cap.

10. The system of claim 9 and further comprising a hard stop (197B) positioned to prevent rotation of the second end of the first spring arm and the first end of the second arm beyond the hard stop.

11. The system of claim 10 wherein a first end of the servo rod is configured to push the second end of the first spring arm and the first end of the second arm in response to pressure of the first gas in the first duct being higher than a pressure of the second gas in the second duct.

12. The system of claim 11 wherein the first end of the servo rod pushes the second end of the first spring arm and the first end of the second arm in response to the pressure of the first gas in the first duct exceeding the pressure of the second gas in the second duct by a first threshold pressure difference.

13. A method comprising:
providing a first gas from a first duct (120) and second gas from a second duct (130) to a servo (185) having portion (187) that moves laterally in response to a difference in pressure of the first gas and second gas;
actuating a first bistable mechanism (137) coupled to a first cap (140) coupled to the first duct in response to pressure in the first duct exceeding pressure in the second duct by a first threshold pressure; and
actuating a second bistable mechanism (163) coupled to a second cap (165) coupled to the second duct in response to pressure in the second duct exceeding pressure in the first duct by a second threshold pressure.

14. The method of claim 13 wherein actuating the second bistable mechanism is performed after actuation of the first bistable mechanism.

15. The method of any one of claims 13-14 and further comprising manually resetting at least one of the first bistable mechanism or the second bistable mechanism.
